# EUROPÄISCHE PATENTSCHRIFT

(11) **EP 0 579 257 B1**
(45) Veröffentlichungstag und Bekanntmachung des Hinweises auf die Patenterteilung: **18.03.1998**
(21) Anmeldenummer: 93111505.9
(22) Anmeldetag: 17.07.1993
(51) Int. Cl.: G01D 5/26, G01N 21/77

(54) **Anordnung zur Bestimmung der durch physikalische bzw. chemische Effekte hervorgerufenen optischen Spektralverschiebung**
Device for determining optical spectral shifts caused by physical or chemical effects
Dispositif pour la détermination des décalages de spectres optiques causés par des effets physiques ou chimiques

(30) Priorität: 17.07.1992 DE 4223629
(43) Veröffentlichungstag der Anmeldung: 19.01.1994
(73) Patentinhaber: BARTEC Messtechnik und Sensorik GmbH, 94239 Gotteszell (DE)
(72) Erfinder: Hoffmann, Jörg, D-07745 Jena (DE); Schwotzer, Günter, D-07747 Jena (DE)
(74) Vertreter: Pfeiffer, Rolf-Gerd

(56) Entgegenhaltungen:
- WO-A-87/00920
- DE-A- 3 137 387
- FR-A- 2 612 627
- GB-A- 2 192 984
- US-A- 4 790 669

## Beschreibung

Faseroptische Sensoren zur Bestimmung physikalischer und chemischer Meßgrößen sind seit längerem bekannt. Die meisten von ihnen nutzen zur Bestimmung der Meßgröße die durch diese im Sensor hervorgerufene Intensitätsänderung. Bei all diesen intensitätsmodulierten Sensortypen stellen die erforderlichen Maßnahmen zur Stabilisierung der durch die Lichtleitfasern geleiteten Lichtintensitäten eine sich kostenungünstig auswirkende Größe dar, weshalb der erhoffte Marktdurchbruch dieser in vielen Bereichen der Forschung und Technik einsetzbaren Sensoren mit ihren vorteilhaften Einsatzbedingungen bislang ausblieb.
In SPIE Vol. 1011 Fiber Optic Sensors III (1988) ist ein Drucksensor beschrieben, bei dem ein miniaturisiertes Fabry-Perot-Interferometer an eine Lichtleitfaser angekoppelt ist, bei dem das Interferenzspektrum zur Auswertung von Druckänderungen herangezogen wird.
Dazu wird das Fabry-Perot-Interferometer mit einer breitbandigen Lichtquelle beleuchtet und das vom Interferometer gefilterte Licht (Interferenzspektrum) über ein optisches Beugungsgitter auf einen Zeilendetektor abgebildet. Mit dem Zeilendetektor werden die spektralen Lagen der absoluten Interferenzmaxima oder -minima detektiert. Die Verschiebungen dieser Interferenzextrema sind ein Maß für die zu messenden Druckänderungen. Diese Anordnung liefert zwar von der Lichtintensität unabhängige Meßergebnisse, sie besitzt aber die Genauigkeit einschränkende Nachteile, weil die so bestimmte spektrale Lage der Interferenzextrema durch die spektrale Emissionscharakteristik der Lichtquelle und durch die spektral abhängige Dämpfung der gesamten optischen Übertragungsstrecke einschließlich des Beugungsgitters und der Abbildungsoptik und durch den spektralen Empfindlichkeitsverlauf des Zeilendetektors beeinflußt, d.h. verfälscht, wird. Demzufolge liefert diese Anordnung auch keine zuverlässigen Meßergebnisse über einen größeren spektralen Meßbereich, wie es bei faseroptischen Sensoren, deren Meßprinzip auf Farbänderungen beruht (wie z.B. einige Arten von Temperatursensoren oder auch chemische Sensoren), von Bedeutung ist. Die Patentschrift FR 2 612 627 A beschreibt eine letzt genannter Quelle analoge Anordnung, deren komplizierter Aufbau dort augenscheinlich nochmals ersichtlich ist.

Aus DE 31 37 387 A1 ist ein faseroptisches Meßgerät zum Messen physikalischer und chemischer Größen bekannt. Nachteilig an der dort beschriebenen Lösung ist ihr durch die Verwendung eines Filterrades mit Filtern und mit mechanisch bewegten Teilen recht komplizierter Aufbau, was bei empfindlichen optischen Messungen grundsätzlich zu Problemen führt. Weiterhin bedarf es bei dieser Lösung einer Abstimmung der spektralen Emission der Lichtquelle auf die jeweiligen Filtereigenschaften, die weiterhin auf die spektralen Filtereigenschaften der Geber abzustimmen sind. Durch diesen Aufbau ergeben sich zeitaufwendige mechanische Stellvorgänge. Weiterhin erfordert diese Lösung die Bestimmung einer Reihe von Geräteparametern, die in einer gesonderten Kalibrierphase zu ermitteln und mathematisch miteinander zu verknüpfen sind. Eine präzise und über lange Zeiten stabile Detektion größerer und kontinuierlich zusammenhängender Spektren ist mit einer Anordnung nach DE 31 37 387 A1 nicht möglich.

Schließlich ist in GB 2 192 984 A eine optische Sensoranordnung offenbart, die eine gleiche Anzahl unterschiedlicher Faserwege zu einer gleichen Anzahl unterschiedlicher Detektoren beinhaltet, jedoch mit der einschneidenden Bedingung unterschiedlich langer Faserwege, die Voraussetzung für die Funktionsfähigkeit dieser Lösung sind. Die aus den unterschiedlich langen Faserwegen resultierenden unterschiedlich langen Lichtsignallaufzeiten sind in dieser Schrift Voraussetzung dafür, um eine Zuordnung der Signale zum jeweiligen Detektor überhaupt vornehmen zu können. Das heißt diese Anordnung funktioniert nur im beschriebenen Laufzeit-Meß-Regimes.

Allen drei letztgenannten Lösungen haftet technisch teilweise ein äußerst kompliziert umzusetzender und aufwendiger Aufbau an und sie liefern nicht die für technische Anwendungen notwendige Stabilität und Meßgenauigkeit.

Speziell für Feuchtemessungen ist weiterhin seit längerem bekannt, daß optische Schichtsysteme, bestehend aus einer oder mehreren dielektrischen Einzelschichten, deren Dicke jeweils ungefähr ein Viertel oder ein Halbes der Wellenlänge des Meßlichtes (λ/4, λ/2) beträgt, porös sind und durch Wasserabsorption ihre Reflexions- und Transmissionseigenschaften ändern, wenn sich der Feuchtegehalt der sie umgebenden Luft ändert (vgl. z.B. H. Koch: "Optische Untersuchungen zur Wasserdampfsorption in Aufdampfschichten"; phys. stat. sol., 12 (1965) 533-43). Bei Systemen aus Vielfachschichten ist dieser Effekt deutlicher als bei einer Einfachschicht.
In DE 36 19 017 wird vorgeschlagen, diesen Effekt für einen optisch dielektrischen Feuchtigkeitsmesser zu nutzen. Dazu wird ein solches Schichtsystem auf einen durchscheinenden Träger aufgebracht, der so entstehende teildurchlässige Spiegel in einen optischen Strahlengang schmalbandigen polarisierten Lichtes gebracht und durch Quotientenbildung aus den in Abhängigkeit von der Feuchteaufnahme sich ändernden reflektierten und durchgelassenen Lichtintensitäten ein feuchteabhängiges Meßsignal gebildet. Nach einer solchen Anordnung sind keine kleinen, kompakten und stabilen Feuchtigkeitsmesser bzw. -sensoren herstellbar.
In DE 38 32 185 C2 wird deshalb vorgeschlagen, das poröse und feuchtigkeitsempfindliche Vielfachschichtsystem als interferometrische Anordnung unmittelbar auf einer Oberfläche bzw. der Schnittfläche einer optischen Faser aus Glas oder Kunststoff anzuordnen. Diese Anordnung ermöglicht zwar extrem kleine Meßsondenabmessungen hat aber den Nachteil, daß die mögliche hohe Feuchteempfindlichkeit der interferometrischen Schichtanordnung meßtechnisch nur unbefriedigend genutzt werden kann, weil die in mehrmodigen Lichtleitfasern geführten Lichtmoden in einem großen Winkelbereich auf die feuchteempfindliche Schicht auftreffen und somit die spektrale Filtercharakteristik der Schicht verfälscht und abgeflacht wird. Desweiteren ist der feuchteempfindliche Meßbereich bzw. die Meßempfindlichkeit durch die Wahl der optischen Eigenschaften des Schichtsystems in Verbindung mit der Wahl des Fasertyps und der Wellenlänge des verwendeten Meßlichtes für die praktische Anwendung oftmals einschränkend festgelegt.
Bei diesen Systemen bestehen die selben o.g. Probleme der Intensitätsstabilisierung.

Es wurde bereits eine Anordnung mit einem faseroptischen Schaltelement vorgeschlagen, das bei Verwendung mehrerer Lichtquellen und mehrerer Sensoren mehrere Eingänge und Ausgänge aufweist. Die Verwendung eines solchen Schaltelements ist kostenungünstig. Außerdem ist aus der US-PS 4,790,669 eine spektroskopische Methode und Anordnung für optische Temperaturmessungen bekannt, bei der Licht einer breitbandigen Lichtquelle über einen Multiplexer und über Lichtleiter zu Temperatursensoren und von diesen über Lichtleiter zu einer flächenhaften, aus mehreren nebeneinanderliegenden Empfängerzeilen bestehenden Detektoranordnungen geführt wird. Diese Anordnung bedarf eines erheblichen Aufwandes an Detektoren und elektronischen Schalt- und Auswertemitteln.

Durch die Erfindung soll eine kostengünstige, schnell, sicher und genau arbeitende Anordnung zur Bestimmung der durch physikalische bzw. chemische Effekte hervorgerufenen optischen Spektralverschiebung geschaffen werden.

Gemäß der Erfindung wird diese Aufgabe durch das Kennzeichen des ersten Patentanspruchs gelöst. Dadurch werden optische Schalter mit mechanischen Umschaltvorgängen ebenso vermieden, wie der Gebrauch von optischen Multiplexern, Matrizen von Fotoempfängern als Detektoren und umfangreichen Auswerteelektroniken. Die Lichtquelle ist vorzugsweise breitbandig. Das dispersive Element ist ein Prisma oder ein Gitter. Vorteilhaft ist dabei zwischen jedem Sensor einerseits und jeder Lichtquelle bzw. dispersiven oder polychromatischen Baugruppe andererseits ein X-Koppler vorgesehen. Ist an die Stelle des X- ein Y-Koppler eingefügt, so wird zwischen dem Sensor und dem Y-Koppler nur eine Lichtleitfaser für das hin- und zurücklaufende Licht benötigt und damit eine weitere Vereinfachung hinsichtlich der Bauelemente erreicht. Sind zwischen dem X- bzw. Y-Koppler und dem jeweiligen Sensor Trennmittel in den Lichtleitfasern bzw. der Lichtleitfaser vorgesehen, so ist es möglich, eine direkt verbindende Lichtleitfaser zwischen der Lichtquelle und dem Eingang zur dispersiven bzw. polychromatischen Baugruppe einzusparen, auch wenn die Trennstelle nur einen Bruchteil von wenigen Prozenten des von der Lichtquelle ausgehenden Lichtes zum Baugruppeneingang reflektiert. Dieser Bruchteil kann, vorzugsweise bei gleichzeitiger elektrischer bzw. elektronischer Verstärkung, zur Ermittlung des Bezugsspektrums benutzt werden. Zur Durchführung eines weiteren z.B. in DE 41 33 125 C1 detailliert beschriebenen Kalibriervorgangs wird die Wirkung der Trennmittel wieder aufgehoben. Als Trennmittel können optische Verschlüsse ebenso zur Anwendung kommen wie Steckverbindungen, die elektrisch oder elektronisch bzw. manuell betätigt werden.

Eine vorteilhafte Ausführungsform ergibt sich, wenn jeder Lichtquelle und dem zugehörigen Sensor nur ein Baugruppeneingang zugeordnet, für alle Baugruppeneingänge nur ein zeilenförmiger Detektor vorhanden und jeweils nur ein Baugruppeneingang in Übereinstimmung mit dem zugehörigen Sensor und der zugehörigen Lichtquelle wirksam ist. Dadurch wird jeweils nur das Signal eines Sensors empfangen und gespeichert. Die Signale der einzelnen Sensoren werden elektronisch gesteuert nacheinander vom selben Detektor, z.B. einer Dioden- oder CCD-Zeile empfangen.

Die Erfindung wird nachstehend anhand der schematischen Zeichnung dreier Ausführungsbeispiele näher erläutert. Es zeigen:
- Fig. 1: eine erfindungsgemäße Anordnung mit mehreren Lichtquellen, Sensoren und Polychromatoreingängen,
- Fig. 2: einen Teil der erfindungsgemäßen Anordnung mit einem X-Koppler und
- Fig. 3: einen Teil der erfindungsgemäßen Anordnung mit einem Y-Koppler.

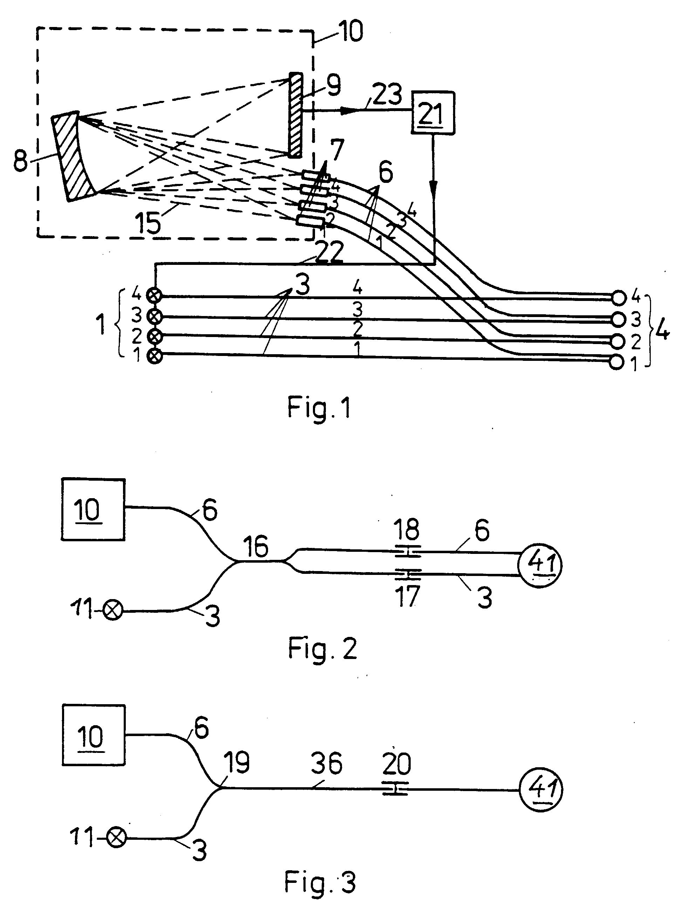

In Fig. 1 führen von Lichtquellen 11, 12, 13 , 14 Lichtleitfasern 31, 32, 33, 34 zu Sensoren 41, 42, 43, 44 und von diesen Lichtleitfasern 61, 62, 63, 64 zu Eingängen 71, 72, 73, 74 eines Polychromators 10, in dem sich im Strahlengang 15 nacheinander ein optisch dispersives Element (Beugungsgitter) 8 und ein zeilenförmiger Detektor (CCD-Zeile) 9 befinden. Eine Registrier- und Auswerteeinheit 21 ist über Leitungen 22 mit den Lichtquellen 11 bis 14 und über Leitungen 23 mit dem Detektor 9 verbunden.

Die Auswerteeinheit 21 wählt elektronisch nacheinander oder in einer vorbestimmten Reihenfolge die Lichtquellen 11 bis 14 aus, von denen jeweils eine durch eine Lichtleitfaser 31 bis 34 zeitlich moduliertes Licht zu einem der Sensoren 41 bis 44 sendet, das durch den jeweiligen Sensor 41, 42, 43 oder 44 beeinflußt und durch die entsprechende Lichtleitfaser 61, 62, 63 oder 64 sowie den entsprechenden Eingang 71, 72, 73 oder 74 in den Polychromator 10 eintritt. Die Eingänge 71 bis 74 bilden eine Faserzeile rechtwinklig zu den Linien des Beugungsgitters 8, so daß jedes der dispersiv zerlegten Sensorspektren auf den zeilenförmigen Detektor 9 gerichtet ist. Das Beugungsgitter 8 erzeugt also auf dem Detektor 9 Spektren, deren Abstände durch die Abstände der Eingänge 71 bis 74 voneinander sowie durch die Beugungseigenschaften des Beugungsgitters 8 und des Polychromators 10 bestimmt sind. Der Detektor 9 liefert aufgrund jedes Spektrums im Takt der Ansteuerung der Lichtquellen 11 bis 14 ein Signal an die Registrier- und Auswerteeinheit 21, das dem jeweiligen Sensor 41 bis 44 durch elektronische Filterung zuordenbar ist und das registriert und zur Auswertung benutzt wird. Bei dieser Vorgehensweise sind die Beeinflussungen der Lichtströme durch die Sensoren 41 bis 44 nacheinander erfaß- und auswertbar.
In Fig. 1 werden bspw. vier Sensoren 41 bis 44 zur Meßwertgewinnung benutzt. Jedoch können in Abhängigkeit von der Meßaufgabe auch mehr oder weniger Sensoren und dementsprechend Lichtquellen, Lichtleitfasern und Polychromatoreingänge erforderlich sein.

In Fig. 2, die einen Teil der erfindungsgemäßen Anordnung darstellt, sendet z.B. die Lichtquelle 11 über die Lichtleitfaser 3 einen X-Koppler 16, ein Trennmittel 17 Licht sowie über eine Lichtleitfaser 6 mit einem Trennmittel 18 Licht zum Sensor 41, von dem es nach entsprechender Beeinflussung durch die Lichtleitfasern 3 und 6 mit den Trennmitteln 17, 18, den X-Koppler und die Lichtleitfaser 6 teilweise zum Polychromator 10 gelangt und wie zu Fig. 1 beschrieben verarbeitet wird. Nach Trennung der Lichtleitfaser 3 bzw. 6 mit Hilfe der Trennmittel 17, 18 wird an den Trennflächen der Lichtleitfasern 3 und 6, die auf der Seite des X-Kopplers liegen, genügend Licht (ca. 4%) zum Polychromator 10 reflektiert, um dort ein Bezugsspektrum und daraus ein Bezugssignal zu erzeugen. Das dabei im Detektor 9 erzeugte Signal wird vorteilhaft verstärkt der Registrier- und Auswerteeinheit 21 (Fig. 1) zugeführt.

In Fig. 3, die einen Teil der erfindungsgemäßen Anordnung darstellt, sendet bspw. wieder die Lichtquelle 11 Licht durch die Lichtleitfaser 3 einen Y-Koppler 19 und eine gemeinsame, ein Trennmittel 20 aufweisende Lichtleitfaser 36 zum Sensor 41, an dem es reflektiert wird. Vom Sensor 41 gelangt dieses Licht durch die gleiche gemeinsame Lichtleitfaser 36 über den Y-Koppler 19 zu einer Lichtleitfaser 6, die in den Polychromator 10 einmündet. Auch in diesem Fall wird ohne eine zusätzliche Lichtleitfaser zwischen Lichtquelle 11 und Polychromator 10 durch Reflexion des Lichtes an der dem Y-Koppler 19 am nächsten liegenden Trennfläche der Lichtleitfaser 36 ein Bezugsspektrum gewonnen.

Jede der Ausführungsformen gemäß der Fig. 2 und 3 kann in einer Anordnung gemäß der Fig. 1 Verwendung finden, so daß die Meßsignale mehrerer Sensoren auswertbar sind.

## Patentansprüche

1. Anordnung zur Bestimmung der durch physikalische bzw. chemische Effekte hervorgerufenen optischen Spektralverschiebung unter Einsatz einer gleichen Anzahl von mehreren Lichtquellen (11, 12, 13, 14) und mehreren Sensoren (41, 42, 43, 44), wobei jeder der Sensoren (41, 42, 43, 44) einerseits über eine Lichtleitfaser (31, 32, 33, 34) mit einer der Lichtquellen (11, 12, 13, 14) und andererseits über eine Lichtleitfaser (61, 62, 63, 64) mit einer polychromatischen Baugruppe (10) mit nur einem zeilenförmig gestalteten Detektor (9) verbunden ist, wobei Eingänge (71, 72, 73, 74) einer Faserzeile rechtwinklig zu den Linien eines Beugungsgitters (8) angeordnet sind, und in jedem der zu bzw. von den Sensoren eingerichteten Lichtleitwegen ein, wenigstens einmal lösbares Trennmittel (17, 18, 20) vorhanden ist.

2. Anordnung gemäß Anspruch 1., dadurch gekennzeichnet, daß zwischen jedem Sensor (41, 42, 43, 44) und jeder Lichtquelle (11, 12, 13, 14) sowie der Baugruppe (10) und dem Trennmittel (17, 18) ein X-Koppler (16) vorgeordnet ist.

3. Anordnung gemäß Anspruch 1, dadurch gekennzeichnet, daß zwischen jedem Sensor (41, 42, 43, 44) und jeder Lichtquelle (11, 12, 13, 14) sowie der Baugruppe (10) und dem Trennmittel (20) ein Y-Koppler (19) vorgeordnet ist und zwischen dem Y-Koppler (19) und dem jeweiligen Sensor (41 bzw. 42 bzw. 43 bzw. 44) nur eine Lichtleitfaser (36) vorhanden ist.

## Claims

1. Arrangement for determining optical spectral shifts due to physical and chemical, respectively, effects by use of an equal number of a plurality of light sources (11, 12, 13, 14) and a plurality of sensors (41, 42, 43, 44), each of said sensors (41, 42, 43, 44), on the one hand, being connected via one light conducting fibre (31, 32, 33, 34), to one of the light sources (11, 12, 13, 14) and, on the other hand, being connected via a light conducting fibre (61, 62, 63, 64) to a polychromatic unit (10) with only one lineshaped detector (9), in which the inputs (71, 72, 73, 74) of one fibre line are arranged at right angles to the lines of a diffraction grating (8), and in each of the light conducting paths to, respectively, from the sensors a separation means (17, 18, 20) is provided which is detachable at least for one time.

2. Arrangement as claimed in claim 1, wherein an X-coupler (16) is prearranged between each sensor (41, 42, 43, 44) and each light source (11, 12, 13, 14), as well as between the unit (10) and the separation means (17, 18).

3. Arrangement as claimed in claim , wherein a Y- coupler (19) is prearranged between each sensor (41, 42, 43, 44) and each light source (11, 12, 13, 14), as well as between the unit (10) and the separation means (20), and wherein only one light conducting fibre (36) is provided between said Y- coupler (19) and the respective sensor (41 and 42 and 43 and 44, respectively).

## Revendications

1. Dispositif pour la détermination des décalages de spectres optiques par des effets physiques ou chimiques et mise en service d'un même nombre de sources lumineuses (11, 12, 13, 14) et de capteurs (41, 42, 43, 44), chacun des capteurs (41, 42, 43, 44) étant connecté d'une part à une des sources lumineuses (11, 12, 13, 14) par une fibre optique (31, 32, 33, 34) et d'autre part par une fibre optique (61, 62, 63, 64) à un module polychromatique (10) comprenant un seul détecteur (9) conçu sous forme de ligne, étant donné que les entrées (71, 72, 73, 74) d'une ligne sont disposées à angle droit par rapport à un réseau de diffraction (8), et où chacun des trajets optiques réalisés, entrant ou sortant des capteurs, comprend un moyen de séparation à supprimer au moins une fois (17, 18, 20).

2. Dispositif selon la revendication 1 est caractérisé en ce qu'entre chaque capteur (41, 42, 43, 44) et chaque source lumineuse (11, 12, 13, 14) et entre le module (10) et l'agent séparateur (17, 18) est agencé un coupleur en X (16).

3. Dispositif selon la revendication 1 est caractérisé en ce qu'entre chaque capteur (41, 42, 43, 44) et chaque source lumineuse (11, 12, 13, 14) et entre le module (10) et l'agent séparateur (20) est agencé un coupleur en Y (19) et ce qu'entre le coupleur en Y (19) et le détecteur concerné (41 ou 42 ou 43 ou 44) n'existe qu'une seule fibre optique (36).
